(19) Europäisches Patentamt
European Patent Office
Office européen des brevets

(11) EP 0 536 721 B1

(12) **EUROPEAN PATENT SPECIFICATION**

(45) Date of publication and mention
of the grant of the patent:
**30.07.1997 Bulletin 1997/31**

(51) Int Cl.⁶: **H04N 7/00**

(21) Application number: **92117121.1**

(22) Date of filing: **07.10.1992**

(54) **A method to process an HDTV signal arriving in the form of a sample sequence**

Verfahren zur Verarbeitung von einem HDTV-Signal das in Form einer Sequenz von Abtastwerten
ankommt

Méthode pour traiter un signal HDTV arrivant sous la forme d'une séquence d'échantillons

(84) Designated Contracting States:
**DE ES FR GB IT NL SE**

(30) Priority: **10.10.1991 FI 914782**

(43) Date of publication of application:
**14.04.1993 Bulletin 1993/15**

(73) Proprietor: **SALORA OY**
**SF-241 01 Salo (FI)**

(72) Inventor: **Lehtonen, Arto**
**SF-33700 Tampere (FI)**

(74) Representative: **Goddar, Heinz J., Dr.**
**FORRESTER & BOEHMERT**
**Franz-Joseph-Strasse 38**
**80801 München (DE)**

(56) References cited:
**EP-A- 0 344 854        EP-A- 0 414 596**
**EP-A- 0 477 823**

• **SYMPOSIUM RECORD BROADCAST SESSIONS June 1989, MONTREUX SWIZERLAND pages 37 - 52 VRESSWIJK ET AL. 'hdmac coding for compatible broadcasting of high definition television signal'**
• **IEEE INTERNATIONAL CONFERENCE ON CONSUMER ELECTRONICS 5 June 1991, ROSEMONT USA pages 304 - 305 CHAO ET AL. 'an interpolator for hd-mac decoder'**
• **IEEE TRANS. ON ACOUSTICS, SPEECH, AND SIGNAL PROCESSING vol. 35, no. 6, June 1987, pages 832 - 838 HEINONEN ET AL. 'fir-median hybrid filter'**
• **SIGNAL PROCESSING OF HDTV II 1990, TURIN , ITALY pages 649 - 655 HAGHIRI ET AL. 'a motion compensated field rate conversion algorithm'**
• **SIGNAL PROCESSING OF HDTV II 1990, TURIN , ITALY pages 177 - 183 KERDRANVAT 'hd-mac encoding algorithm with a progressive signal encoding'**

EP 0 536 721 B1

**Description**

The invention relates to a high definition television HDTV-receiver and more particularly to a method to decode a received HDTV signal and to increase the scanning rate over the original rate.

The European High Definition Television, HDTV, is developed as a sub-programme of the European project EUREKA. The system specifications contain a proposal for an HDTV production standard defining the program display format in studio environment as well as a proposal for a transmission standard. Transmission is realized via satellite or cable using the MAC system, which is incompatible with all traditional television systems. Therefore the present receivers require a special decoder in order to receive a MAC transmission. The aspect ratio of a picture according to the HDTV studio standard is 16:9 and it comprises 1250 lines displayed with an interlace ratio of 2:1 (or later 1:1) and a field rate of 50 Hz. However, this HDTV picture must be compressed for transmission so that it will be compatible with present receivers provided with a MAC-decoder. In the transmission process the picture is coded to a MAC-compatible HD-MAC-signal by compressing the signal in a coder, which reduces the bandwidth to one fourth, so that it is possible to restore the original picture in the receiver. Thus the transmission signal has a line rate which is half of the original, or 625 lines, and the interlace ratio is 2:1. At the moment the agreed input signal format of the bandwidth reducing coder is 1250/2:1/50 Hz, but later the interlace ratio probably will be changed to 1:1, and then the compression must be further increased. Regarding the receiver there is within the HD-MAC-signal also transmitted a so called DATV-signal, which transmits information about the motion contents of the picture. The compression is based on a controlled sub-sampling, controlled by the motion information. This means that a lower motion content in the picture causes a higher spatial resolution to be used, and when the picture's motion content is high, then the temporal resolution is increased at the expense of the spatial resolution.

In the above mentioned Bandwidth Reduction Encoder BRE the transmitted picture is divided into blocks of 16*16 pixels, the blocks being directed to one of three picture processing blocks according to their motion contents. The signals directed to each branch have a sampling pattern of their own. If there is no motion the signal is directed to the so called 80 ms branch, in which each field of a picture is sub-sampled (decimated) so that half of the pixels of the final picture are transmitted. Samples are taken from each line, and the decimated line forms a quincunx sampling pattern. This provides one half of the compression, and the other half is obtained so that the transmission time for one picture is increased from 40 ms to 80 ms. The branch names are derived from this. If a picture sub-area contains slowly moving objects the video signal to be compressed is directed to the 40 ms branch, in which the field transmission time is increased from 20 ms to 40 ms, and only every second quincunx sub-sampled field is transmitted, or only every second sample from every second field is taken. If the picture contains rapidly moving objects, then the video signal to be compressed is directed to the 20 ms branch, in which the bandwidth is reduced to one fourth so that every fourth sample of each original picture field is transmitted, or there are samples taken from each line in the original picture. Each BRE branch contains a characteristic low-pass filter and a so called "line shuffling" function, in which the format of a picture with 1250 lines (the duration of one line is 32 µs) is converted into a 625 lines format (the duration of one line is 64 µs) compatible with the MAC-system. In the 40 ms branch this function is included in the actual sub-sampling. The motion identifier provides information which controls a switch connecting only one branch at a time to the output of the BRE. This information about which branch generated the output signal is coded into the DATV-signal, according to which the coder in the receiving end directs the signal to the correct branch.

The compression of the transmitted signal briefly described above is obvious to the person skilled in the art, and the subject is treated in detail e.g. by F.W.P. Vreeswijk, M.R. Haghiri and C.M. Carey-Smith in "HDMAC Coding for Compatible Broadcasting of High Definition Television Signals", 16th international TV Symposium, Montreux, Switzerland, June 17 - 22, 1989; and by F.W.P. Vreeswijk and M.R. Haghiri in "HDMAC Coding for MAC Compatible Broadcasting of HDTV Signals", Third International Workshop on HDTV, Turin, Italy, August 30 - September 1, 1989.

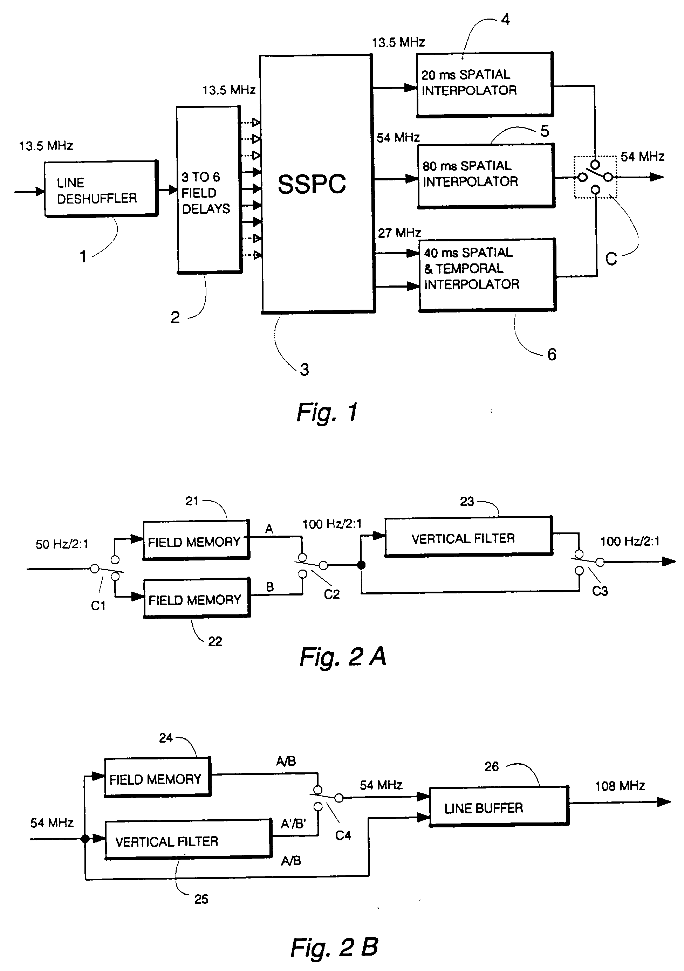

In the MAC decoder of the receiver the compressed picture 625/2:1/50 Hz must be restored to the original HDTV format, or 1250/2:1/50 Hz. In the decoder the received analog television signal is converted into video, data and voice signals. The decoder could be called a bandwidth restoration decoder (BRD) and below it is briefly described with reference to figure 1, the description referring to the luminance signal. The received sampling frequency is 13,5 MHz and the output frequency of the BRD is 54 MHz. The decoder comprises a "line deshuffler" block 1; from 3 to 6 field delays which can be field memories 2, e.g. coupled in a cascade; a sub-sampling pattern converter 3; and three interpolator branches 4, 5 and 6. Each interpolator branch produces a complete HDTV field and the output of the selected branch is connected to the output signal of the BRD by the switch C. The position of the switch is controlled by the motion information in the received DATV-signal. Because the line rate in the transmission was reduced to 16,625 kHz it is necessary to shift the samples of the branches 20 ms, 40 ms and 80 ms, so that the original line rate 31,25 kHz is obtained. This function is performed in block 1 so that from each received line two lines are generated, so that each new line comprises every second sample of a received line. After the deshuffling function the luminance signal is delayed in the field memories 2. Then the field signals are processed in the sub-sample pattern converter SSPC 3, which reconstructs the original sub-sampled patterns. The sub-sampled patterns are supplied from the converter 3 to

2

the branches 4, 5 and 6, in which the original HDTV fields are generated by interpolation. In the 40 ms branch 6 the interpolation is motion compensated and it utilizes the motion vectors indicated by the DATV-signal. Controlled by the DATV-information the switch C connects one branch at a time to the output of the BRD, which then produces the original HDTV picture in the format 1250/2:1/50 Hz.

The chrominance signal is coded basically in the same way as the luminance information. However, no motion compensation is used, and the DATV-signal generated in the processing of the luminance is also used when the chrominance is coded.

The signal from the BRD is further processed to increase its scanning rate, because a low field rate causes detrimental white-field flicker and the 2:1 interleaving causes line flicker, which can be eliminated by increasing the scanning rate. There are two basic methods to increase the scanning rate. The field rate could be increased e.g. to 100 Hz, whereby the format is 2:1/100 Hz, or the interleaving could be eliminated, i.e. the picture is converted into a progressive picture e.g. in the form 1:1/50 Hz. The methods can be sub-divided into methods which do not use motion information, motion adaptive methods, and motion compensating methods.

Increasing the field rate to 100 Hz depends on the motion contents of the picture. For stationary pictures we can simply use a field shifting so that when the original picture AB is formed by the odd line field A and the even line field B (duration 20 ms), then the picture is instead scanned twice within the same period, i.e. as ABAB (the field duration is now 10 ms). Pictures containing motion are processed so that a new field A' and B' is interpolated from the original field lines for each original field A and B, whereby the new picture is AA'B'B. The above presented methods to increase the field rate are realized by the circuits in figure 2. The input odd fields A and even fields B are supplied to own field memories 21, 22 by controlling the switch C1 at the frequency 50 Hz. Stationary pictures are duplicated by reading the memories with the double frequency (100 Hz) and supplying the signal directly to the output, thereby providing the picture ABAB and the field rate is 100 Hz. When moving objects are represented, then the contents of the memories 21 and 22 are supplied to the vertical filter 23, which interpolates the new fields A' and B' within the field. A suitable control of the switches C2 and C3 produces an output AA'B'B. Thus the circuit requires two field memories for luminance processing. The chrominance processing can be realized by a simple field duplicating method AABB. The picture is converted into a progressive picture so that in stationary pictures the pictures are formed of consecutive odd and even fields. When two consecutive original pictures are A1B1, A2B2 (A contains the odd lines, B contains the even lines), then the consecutive progressive pictures are A1B2, A1B1, A2B1, A2B2, and thus each picture is scanned in one sweep. In pictures containing motion a progressive picture is formed using interpolation within the field so that the above presented two consecutive pictures are displayed as four consecutive pictures A1A1', B1B1', A2A2', B2B2', in which the lines marked with an apostrophe are interpolated from the respective field. Figure 2B shows a circuit for converting a picture into a progressive one. Both the A-fields and the B-fields are supplied to the field delay 24, which is used for the processing of stationary pictures, and to the vertical filter 25, which is used for pictures containing motion. The switch C4 selects the method to be used in accordance with the motion in the picture. Two fields are interlaced in the buffer 26, whereby one picture is obtained.

The above presented BRD-part and the scanning rate converter SRC of prior art high definition television have some disadvantages. The major disadvantage is that the receiver requires a high number of expensive HDTV field memories. Prototype receivers developed in connection with EUREKA use 3 - 5 field memories.

The object of this invention is to improve the prior art receiver solution comprising a BRD according to figure 1 and an SRC according to figure 2, and to provide an HDTV receiver bandwidth restoring coder BRD and a scanning rate converter SRC increasing the sampling rate, which form a whole which as simple as possible requiring few field memories. This object is achieved by the method according to claim 1, according to which the format of the BRD output signal is 1250/1:1/50 Hz/Quincunx (1250 lines, progressive scanning, 50 Hz field rate, quincunx sampling pattern), and not the traditional known BRD format 1250/2:1/50 Hz (1250 lines, interlaced scanning, 50 Hz field rate).

The basic realization of the invention is to utilize the fact that the quincunx sub-sampling generated in the known BRD can also be used as the signal format in the interface between the BRD and the SRC. According to the invention the decoder BRD is realized so that the sample patterns of the 20 ms and the 40 ms branches are converted into the same form as the pattern input to the 80 ms branch, whereby the picture format from the different BRD branches is always 1250/1:1/50 Hz and the samples are in a quincunx pattern, in other words: the BRD outputs progressive quincunx sub-sampled pictures with lines, from which every second pixel is missing. The missing samples are now interpolated when the scanning rate of the outputs of each BRD branch is increased (SRC), and with the same interpolation algorithm. Due to the progressive scanning the field is now identical to the picture and no decision algorithm is required to decide, whether an interpolation must be performed within a field or within a picture, as is the case in a known receiver. Then it is possible to simplify the BRD so that the spatial quincunx interpolator is altogether removed from the 80 ms branch, and so that the 20 ms and 40 ms branches can be realized without using more line memories than in the prior art solution. Due to the format conversion it is possible to realize a scanning rate converter, in which the field rate is increased to 100 Hz, using only one half picture memory, compared to the two HDTV field memories required in the prior art (figure 2) solution. The field rate converter does not need the DATV information, because the stationary and the motion containing areas are processed in the same way. It is preferred to use an interpolator according to claims 5 and 10 in the converter.

The basic concept in accordance with the present invention is described in independent claims 1 and 6 respectively.

The invention is described and further illustrated with the aid of the enclosed schematic figures, where

figure 1        shows the block diagram of the decoder in an HDTV receiver;
figure 2A      shows a method to double the field rate;
figure 2B      shows the conversion of a picture to a progressive one;
figure 3        shows a decoder according to the invention and the doubling of the field rate;
figure 4A      shows the output signal sampling pattern of a known BRD;
figure 4B      shows the output signal sampling pattern of the BRD used in the invention; and
figure 5        shows a method to convert the BRD 20 ms branch sampling pattern into a sampling pattern of figure 4B.

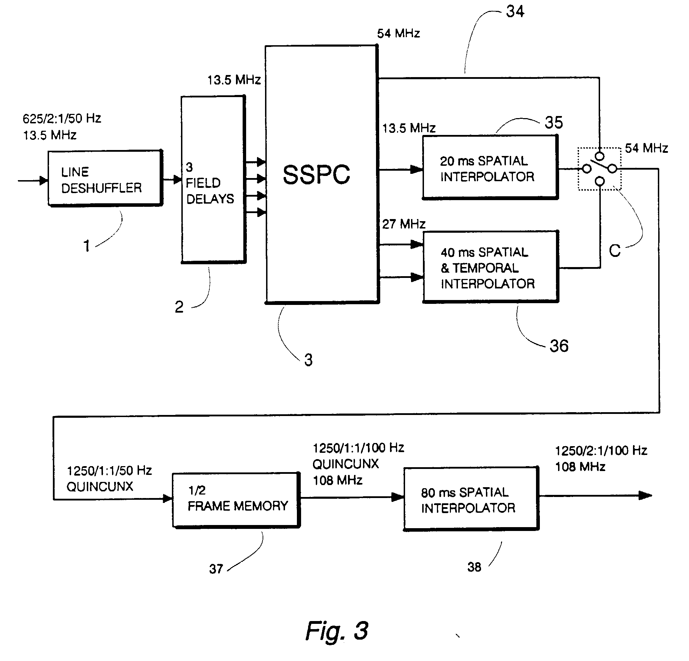

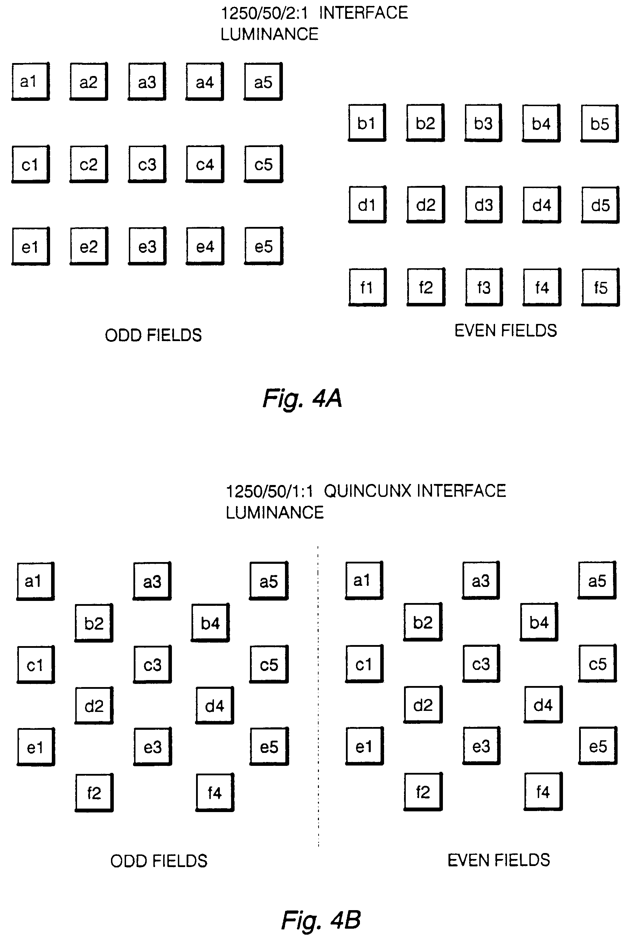

The prior art solution according to figures 1 and 2 was already described above. The bandwidth restorer BRD according to figure 3 comprises basically the same blocks as the known decoder according to figure 1. According to the invention the BRD output format is arranged as 1250/1:1/50 Hz/Quincunx, which is the same as the format of the signal from the SSPC to the 80 ms branch 5 in figure 1. The format is illustrated in figure 4, in which figure 4A shows the HDTV fields of the output signal of a known BRD. The fields are complete orthogonal fields of 625 lines, in which the missing pixels are interpolated between the originally transmitted pixels in the 80 ms, 40 ms and the 20 ms branches. An even field is scanned and interlaced between the odd field. Figure 4B shows a format, which according to the invention is the output format of the BRD. The even and odd fields are identical 1250 line fields due to the progressive scanning. The lines are incomplete (every second pixel is missing) and the pixels are arranged in a quincunx pattern. The interpolation of the missing pixels is carried out later in connection with the field rate conversion.

Because the sampling pattern to the 80 ms branch of the known BRD is already according to figure 4B it is possible to remove the 80 ms spatial quincunx interpolator altogether and direct the signal directly via switch C to the scanning rate converter memory 37, for which a capacity of a 1/2 HDTV picture is sufficient. The interpolators in the 20 ms and of the 40 ms branches must be modified so that their output signals have the same format as the signal from the 80 ms branch.

The sampling pattern input to the 40 ms branch, this pattern containing samples only from every second line of the original picture, arrives in the thinned out quincunx format formed in a prior art decoder. It is easy to obtain the output format used in the invention from this prior art input format of this branch by making a suitable change in the motion compensation. Different methods are obvious to a person skilled in the art and thus not described in more detail here.

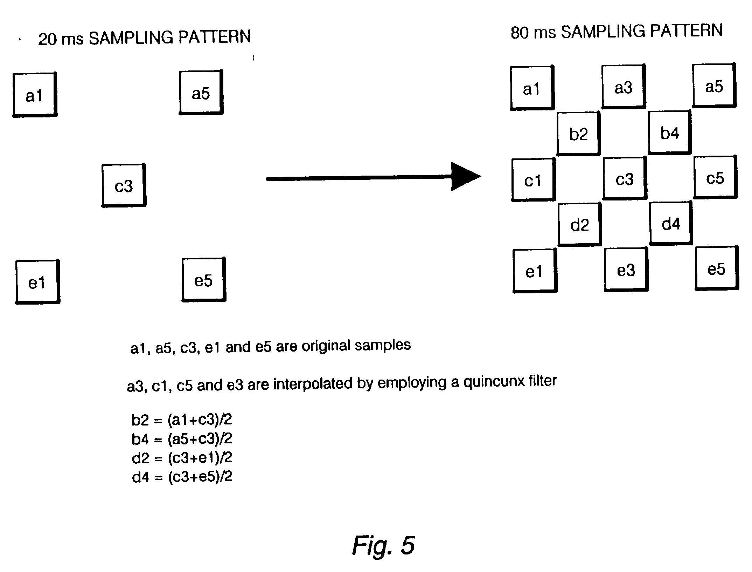

In the 20 ms branch the thinned out quincunx sampling pattern input is converted into a sampling pattern corresponding to the 80 ms branch simply by interpolating the required pixels from the input sampling pattern pixels. The interpolation algorithm can be freely chosen; one possibility is shown in figure 5. The input sampling pattern is on the left side; the sampling pattern is thinned out so that there is every fourth sample taken from each line, and the samples of consecutive lines are not in the same position, but in the horizontal plane for instance the sample $c_3$ is between the samples $a_1$ and $a_5$ of the previous line and between the samples $e_1$ and $e_5$ of the next line. From these samples a pattern is formed, similar to the quincunx pattern of the 80 ms branch, through interpolation of the missing pixels $a_3$, $c_1$, $c_5$ and $e_3$ in a known quincunx interpolator; the rest of the missing pixels $b_2$, $b_4$, $d_2$ and $d_4$ are obtained as averages

$$b_2 = (a_1 + c_3)/2; \qquad b_4 = (a_5 + c_3)/2;$$

$$d_2 = (c_3 + e_1)/2; \qquad d_4 = (c_3 + e_5)/2.$$

As is seen, it is easy to realize this conversion into the format of the interface between the BRD and the SRC.

When especially the 1250/1:1/50 Hz/Quincunx output signal format is selected for all BRD branches it is possible to simplify the BRD embodiment, compared to a prior art decoder. Here it is essential that the employed format must simplify the scanning rate conversion SRC carried out after the BRD. Then considerably fewer expensive memories are required than in the known solution. Because the input signal is non-interlaced it is not necessary to have motion adaptive signal processing in the SRC. But still the displayed picture quality is as good as that obtained in prior art displays using motion adaptive algorithms. The output signal of the SRC is arranged to be either 1250/1:1/50 Hz or 1250/2:1/100 Hz, i.e. a progressively scanned picture with 50 Hz field rate, or an interlaced scanned picture with 100 Hz field rate. Line flicker is avoided when a progressive scanning is used, but the large area white-field flicker remains, because the field rate is unchanged. The conversion from the BRD output format 1250/1:1/50 Hz/Quincunx to the format 1250/1:1/50 Hz is quite simple. It requires only a spatial interpolator which interpolates the missing pixels of the sampling pattern, producing the final orthogonal pattern to be displayed. No field memory is required as in the prior art arrangement, in which one HDTV field memory is required for 1440*576 samples. If the field rate is not increased, the block diagram of the arrangement according to the invention shown in figure 3 is reduced so that the field memory 37 is omitted and the output format of the interpolator 38 is 1250/1:1/50 Hz.

However, in order to remove also the white-field flicker in a cathode ray tube display, it is preferred to increase also the field rate. Due to the format 1250/1:1/50 Hz/Quincunx employed in the invention every field (being at the same time the whole picture) is scanned two times in sequence. Then only one HDTV field memory is required. The arrangement is now according to the lower branch of figure 3. With the aid of the field memory 37 the picture rate is doubled, whereby the field rate of the picture read from the memory is 100 Hz, but the picture is still progressive and in the quincunx sampling pattern form. Then the picture is again converted into an interlaced and orthogonal picture, simply by the 80 ms spatial interpolator, which interpolates the intermediate pixels, and the final displayed picture has the format 1250/2:1/100 Hz.

The improved decoder of an HDTV receiver was described above. Because the HDTV receiver at least initially must be able to receive also transmissions of standard PAL, SECAM and MAC systems, a signal of these systems must first be converted into the same format employed in this invention. This is realized so that in parallel with the bandwidth restorer BRD there is a converter, to which the received picture of standard definition is directed, and which converts the standard picture into a high definition picture. This can be done simply by converting the standard 625/2:1/50 Hz picture into the progressive format 625/1:1/50 Hz. Then the signal in the progressive format is converted into the format 1250/1:1/50 Hz/Quincunx employed in the invention, e.g. using an interpolator of the FMH type. An interpolator of this type is described in the Finnish patent application no 904717. Now the signal is similar to that employed in the invention, and its scanning rate can be increased in the same way as described above. Finally, if required, the aspect ratio 4:3 is converted to 16:9 with a suitable horizontal interpolator.

As described above, a similar quincunx sampling pattern is obtained from each branch of the bandwidth restorer BRD, and in this sampling pattern the missing pixels are interpolated. The invention does not pose limitation on the employed interpolator, and it could be of any known type, e.g. a simple three point median filter. However, the known interpolators cause different faults in the final picture, depending on the frequency response; the lines, particularly diagonal lines, are not always reproduced as clear lines, or they could be cut, or the outlines could bee too sharp. In this invention it is preferred to use a median filter having a linear FIR-filter as a sub-structure. A filter of this kind is called an FMH-filter (FIR Median Hybrid). The 7-point filter employed in the invention is described in the Finnish patent application no 904717 and it interpolates a new pixel according to the equation below

$$Y_{FMH7} = \text{MEDIAN} \left[ X_{(0,-1)}, X_{(-1,0)}, X_{(1,0)}, X_{(0,1)}, Y_{FIRI}, Y_{hor}, Y_{ver} \right]$$

in which
the first subindex of X represents the horizontal position of the pixel and the second subindex its vertical position,

$Y_{FIRI}$ is a value, interpolated by suitable linear FIR-filter, in which the input point group can be larger than the immediate neighbor point,

$Y_{hor} = [X_{(-1,0)} + X_{(1,0)}]/2$ limits the value of the linear sub-structure in the horizontal plane,

$Y_{ver} = X_{(0,-1)} + X_{(0,1)}]/2$ limits the value of the linear sub-structure in the vertical plane.

The interpolator according to the above equation retains very thin horizontal and vertical lines and also diagonal lines and acute angles. It performs well also regarding impulse noise introduced by the transmission path. It will not remove it, because the original received pixels are not modified at all, but it will prevent it from spreading.

The format according to the invention could be used also for the processing of chrominance signals. However, it is preferable to use the format 1250/2:1/50 Hz/Quincunx, because this requires a lower sampling frequency and smaller field memories. The picture quality will not be lower, however, because the quincunx sampling pattern is already used in known HD-MAC-systems. This format is preferable if the displayed picture format is 1250/1:1/ 100 Hz/Quincunx, because the doubling of the field rate could be carried out at a lower sampling frequency, and a field memory size of only 376*576 samples is sufficient for each color component. The quincunx interpolation is carried out after the doubling of the field rate.

The solution according to the invention, in which the format of the interface between BRD and SRC is chosen in the described way; presents numerous advantages compared to the prior art solution. The lower number of HDTV memories, three instead of six, is essential. The scanning rate converter requires only a half picture memory, and the DATV information is not required at all, because the stationary and motion containing sub-areas of the picture are processed by the same interpolator. Additional picture facilities, such as zoom, freeze and picture-in-picture facilities are preferably located between the BRD and the SRC. The inventive solution is applicable also to the processing of chrominance signals, because the signal can use a lower sampling frequency than the known system, and smaller field memories are required. The picture quality, however, does not deteriorate.

**Claims**

1. A method to process in a HD-MAC receiver a deshuffled video signal having the form of a sample sequence and derived on the transmitter side from an original picture by sub-sampling, the method comprising

   - directing said deshuffled video signal into memories (2),
   - reading the samples stored in the memories (2) and processing them so that the original sub-sampling patterns are generated,
   - directing the generated sub-sampling patterns to three signal processing branches (34, 35, 36), of which the first branch (34) processes within a picture frame samples from such picture areas that are essentially stationary, and the second branch (36) processes within a field samples from such picture areas in which there is slow motion, and the third branch (35) processes within a field samples from such picture areas in which there is rapid motion,
   - connecting with a switch (C), which is controlled by the picture motion information (DATV) in the received signal, the sampling patterns generated in the signal processing branches (34, 35, 36) one at a time to a conversion means, which can increase the original scanning rate,

   characterized in that

   - processing in each signal processing branch the samples so that the signal format in the branch output is 1250/1:1/50 Hz/Quincunx, i.e. 1250 lines, 50 Hz field rate, progressive scanning, samples in a quincunx pattern, whereby half of the HDTV picture pixels are missing,
   - interpolating in the conversion means the missing pixels using one and the same interpolator (38) for the sampling patterns obtained from each signal processing branch (34, 35, 36), whereby the result is a complete orthogonal HDTV picture (1250/1:1/50 Hz or 1250/2:1/100 Hz).

2. Method according to claim 1, characterized in that the sub-sampling pattern directed to the first branch (34) is directed as such to said picture motion information controlled switch (C).

3. Method according to claim 1, characterized in that the missing pixels are interpolated in the conversion means using a spatial quincunx interpolator (38), whereby the format of the resulting HDTV picture is 1250/1:1/50 Hz.

4. Method according to claim 2, characterized in that the sampling patterns from the signal processing branches (34, 35, 36) at first are stored into a conversion means memory (37) having the size of half a HDTV picture frame, from which memory the fields are read two times in sequence, whereby the scanning frequency is 100 Hz, and that the missing pixels are interpolated using said spatial quincunx interpolator (38), whereby the format of the resulting HDTV picture is 1250/2:1/100 Hz.

5. Method according to claim 1, characterized by using for said quincunx interpolator (38) a 7-point hybrid median filter structured in the form of a linear FIR-filter, and for which

$$Y_{FMH7} = MEDIAN \left[ X_{(0,-1)}, X_{(-1,0)}, X_{(1,0)}, X_{(0,1)}, Y_{FIRI}, Y_{hor}, Y_{ver} \right]$$

   in which

   the first subindex of X represents the horizontal position of the pixel and the second subindex its vertical position,

   $Y_{FIRI}$ is a value, interpolated by a suitable linear FIR-filter, in which the group of input points may include also other points besides the immediate neighbouring points,

$$Y_{hor} = [X_{(-1,0)} + X_{(1,0)}]/2,$$

$$Y_{ver} = X_{(0,-1)} + X_{(0,1)}]/2.$$

6. Device for processing in a HD-MAC receiver a deshuffled video signal having the form of a sample sequence and derived on the transmitter side from an original picture by sub-sampling, the device comprising

- memories (2), which can store a desired number of received samples,
- a sub-sampling pattern restoring circuit (3), which reads the samples stored in the memories (2) and which, controlled by the picture motion information (DATV) in the received signal, restores the original sub-sampling patterns,
- three parallel signal processing branches (34, 35, 36) connected to the sub-sampling pattern restoring circuit (33), of which the first branch (34) processes within a picture frame samples from such picture areas that are essentially stationary, and the second branch (36) processes within a field samples from such picture areas in which there is slow motion, and the third branch (35) processes within a field samples from such picture areas in which there is rapid motion, and to which signal processing branches said restored sub-sampling patterns are directed in accordance with said picture motion information (DATV),
- a switching means (C) which is controlled by said picture motion information (DATV) and which connects the signals generated in said signal processing branches (34, 35, 36) one at a time to a scanning rate conversion means (37, 38), which can convert the original scanning rate of 50 Hz to a higher rate, characterized in that
- each signal processing branch comprises means to process the samples so that the signal format in each branch output is 1250/1:1/50 Hz/Quincunx, i.e. 1250 lines, 50 Hz field rate, progressive scanning, samples in a quincunx pattern, whereby half of the HDTV picture pixels are missing, and
- the scanning rate conversion means (37, 38) comprises a spatial quincunx interpolator (38), which interpolates the missing pixels, whereby the result is a complete orthogonal HDTV picture (1250/1:1/50 Hz or 1250/2:1/100 Hz).

7. Device according to claim 6, characterized in that a sub-sampling pattern directed to the first signal processing branch (35) is directed as such by this branch to said picture motion information controlled switching means (C).

8. Device according to claim 6, characterized in that the scanning rate conversion means (38) interpolates the missing pixels using a spatial quincunx interpolator (38), whereby the format of the resulting HDTV picture is 1250/1:1/50 Hz.

9. Device according to claim 8, characterized in that the conversion means comprises a memory (37) having the size of half a HDTV picture frame, in which a sub-sampling pattern from said signal processing branches (34, 35, 36) is stored, and from which the field is read two times in sequence into said spatial interpolator (38), which interpolates the missing pixels, whereby the format of the resulting HDTV picture is 1250/2:1/100 Hz.

10. Device according to claim 8 or 9, characterized in that said quincunx interpolator is a 7-point hybrid median filter structured in the form of a linear FIR-filter, and for which

$$Y_{FMH7} = MEDIAN\ [X_{(0,-1)}, X_{(-1,0)}, X_{(1,0)}, X_{(0,1)}, Y_{FIRI}, Y_{FIRI}, Y_{hor}, Y_{ver}]$$

in which

the first subindex of X represents the horizontal position of the pixel and the second subindex its vertical position,

$Y_{FIRI}$ is a value, interpolated by a suitable linear FIR-filter, in which the group of input points may include also other points besides the immediate neighbouring points,

$$Y_{hor} = [X_{(-1,0)} + X_{(1,0)}]/2,$$

$$Y_{ver} = X_{(0,-1)} + X_{(0,1)}]/2.$$

**11.** Device according to claim 6, characterized in that said memories (2) are three HDTV field memories.

**Patentansprüche**

**1.** Verfahren zum Verarbeiten eines entmischten Videosignals in einem HD-MAC-Empfänger, wobei das entmischte Videosignal die Form einer Abtastfolge hat und auf der Senderseite durch Unterabtastung aus einem Originalbild abgeleitet wird, mit folgenden Verfahrensschritten:

Führen des entmischten Videosignals in Speicher (2), Lesen der in den Speichern (2) gespeicherten Abtastwerte und Verarbeiten derselben, so daß die ursprünglichen Unterabtastmuster erzeugt werden,
Führen der erzeugten Unterabtastmuster zu drei Signalverarbeitungszweigen (34, 35, 36), von denen der erste Zweig (34) innerhalb eines Vollbildes Abtastwerte aus solchen Bildbereichen verarbeitet, die im wesentlichen stationär sind, und der zweite Zweig (36) innerhalb eines Teilbildes Abtastwerte aus solchen Bildbereichen verarbeitet, in denen eine langsame Bewegung stattfindet, und der dritte Zweig (35) innerhalb eines Teilbildes Abtastwerte aus solchen Bildbereichen bearbeitet, in denen eine schnelle Bewegung stattfindet,
Verbinden der in den Signalverarbeitungszweigen (34, 35, 36) erzeugten Abtastmuster einzeln mit einer Wandlervorrichtung, welche die ursprüngliche Abtastrate erhöhen kann, mit Hilfe eines Schalters (C), der von der Bildbewegungsinformation (DATV) in dem empfangenden Signal gesteuert wird,

dadurch **gekennzeichnet,** daß

in jedem Signalverarbeitungszweig die Abtastwerte so verarbeitet werden, daß das Signalformat in dem Zweigausgang 1250/1:1/50 Hz/Quincunx ist, d.h. 1250 Zeilen, 50 Hz Bildfrequenz, progressive Abtastung, Abtastwerte in einem Quincunx-Muster, wobei die Hälfte der HDTV-Bildpixel fehlen,
Interpolieren der fehlenden Pixel in der Wandlervorrichtung mit Hilfe ein und desselben Interpolators (38) für die Abtastmuster, welche von jedem Signalverarbeitungszweig (34, 35, 36) erhalten werden, wobei das Ergebnis ein vollständig orthogonales HDTV-Bild ist (1250/1:1/50 Hz oder 1250/2:1/100 Hz).

**2.** Verfahren nach Anspruch 1, dadurch **gekennzeichnet,** daß das Unterabtastmuster, welches zu dem ersten Zweig (34) geführt wird, als solches zu dem durch die Bildbewegungsinformation gesteuerten Schalter (C) geführt wird.

**3.** Verfahren nach Anspruch 1, dadurch **gekennzeichnet,** daß die fehlenden Pixel in der Wandlervorrichtung mit einem räumlichen Quincunx-Interpolator (38) interpoliert werden, wobei das Format des resultierenden HDTV-Bildes 1250/1:1/50 Hz ist.

**4.** Verfahren nach Anspruch 2, dadurch **gekennzeichnet,** daß die Abtastmuster von den Signalverarbeitungszweigen (34, 35, 36) zuerst in einem Speicher (37) der Wandlervorrichtung mit der Größe eines halben HDTV-Vollbildes gespeichert werden, wobei aus diesem Speicher die Teilbilder zweimal in Folge gelesen werden, und wobei die Abtastfrequenz 100 Hz ist, und daß die fehlenden Pixel mit dem räumlichen Quincunx-Interpolator interpoliert werden, wobei das Format des resultierenden HDTV-Bildes 1250/2:1/100 Hz ist.

**5.** Verfahren nach Anspruch 1, **gekennzeichnet** durch die Verwendung eines hybriden 7-Punkt-Medianfilters für den Quincunx-Interpolator (38), welches in der Form eines linearen FIR-Filters strukturiert ist, und für das

$$Y_{FMH7} = MEDIAN\ [X_{(0,-1)}, X_{(-1,0)}, X_{(1,0)}, X_{(0,1)}, Y_{FIRI}, Y_{hor}, Y_{ver}]$$

gilt, wobei der erste Index von X die horizontale Position des Pixels und der zweite Index seine vertikale Position anzeigt, und wobei $Y_{FIRI}$ ein Wert ist, der von einem geeigneten linearen FIR-Filter interpoliert wird, bei dem die Gruppe der Eingangspunkte auch andere Punkte neben den unmittelbaren Nachbarpunkt umfassen kann, und

$$Y_{hor} = [X_{(-1,0)} + X_{(1,0)}]/2$$

$$Y_{ver} = [X_{(0,-1)} + X_{(0,1)}]/2.$$

6. Vorrichtung zum Verarbeiten eines entmischten Videosignals in einem HD-MAC-Empfänger, wobei das Signal die Form einer Abtastfolge hat und auf der Senderseite aus einem Originalbild durch Unterabtastung abgeleitet wird, mit folgenden Merkmalen:

Speicher (2), welche eine gewünschte Anzahl empfangener Abtastwerte speichern können,
eine Unterabtastmuster-Wiederherrstellungsschaltung (3), welche die in den Speichern (2) gespeicherten Abtastwerte liest und welche, gesteuert durch die Bildbewegungsinformation (DATV) in dem empfangen Signal, die ursprüngliche Unterabtastmuster wiederherstellt,
drei parallelen Signalverarbeitungszweigen (34, 35, 36), welche mit der Unterabtastmuster-Wiederherstellungsschaltung (33) verbunden sind, von denen der erste Zweig (34) innerhalb eines Vollbildes Abtastwerte aus solchen Bildbereichen verarbeitet, die im wesentlichen stationär sind, und der zweite Zweig (36) innerhalb eines Teilbildes Abtastwerte aus solchen Bildbereichen verarbeitet, bei denen eine langsame Bewegung stattfindet, und der dritte Zweig (35) innerhalb eines Teilbildes Abtastwerte aus solche Bildbereichen verarbeitet, in denen eine schnelle Bewegung stattfindet, und wobei in diese Signalverarbeitungszweige die wiederhergestellten Unterabtastmuster abhängig von der Bildbewegungsinformation (DATV) geführt werden,
eine Schaltvorrichtung (C), welche von der Bildbewegungsinformation (DATV) gesteuert wird und die in den Signalverarbeitungszweigen (34, 35, 36) erzeugten Signale einzeln mit einer Abtastraten-Wandlervorrichtung (37, 38) verbindet, welche die ursprüngliche Abtastrate von 50 Hz in eine höhere Rate umwandeln kann, dadurch **gekennzeichnet,** daß,
jeder Signalverarbeitungszweig eine Vorrichtung zum Verarbeiten der Abtastwerte aufweist, so daß das Signalformat in jedem Zweigausgang 1250/1:1/50 Hz/Quincunx ist, d.h. 1250 Zeilen, 50 Hz Bildfrequenz, progressive Abtastung, Abtastwerte in einem Quincunx-Muster, wobei die Hälfte der HDTV-Bildpixel fehlen, und die Abtastraten-Wandlervorrichtung (37, 38) einen räumlichen Quincunx-Interpolator (38) aufweist, welcher die fehlenden Pixel interpoliert, wobei das Ergebnis ein vollständiges orthogonales HDTV-Bild ist (1250/1:1/50 Hz oder 1250/2:1/100 Hz).

7. Vorrichtung nach Anspruch 6, dadurch **gekennzeichnet,** daß das Unterabtastmuster, welches zu dem ersten Signalverarbeitungszweig (35) geführt wird, als solches zu dem durch die Bildbewegungsinformation gesteuerten Schalter (C) geführt wird.

8. Vorrichtung nach Anspruch 6, dadurch **gekennzeichnet,** daß die Abtastraten-Wandlervorrichtung (38) die fehlenden Pixel mit einem räumlichen Quincunx-Interpolator (38) interpoliert, wobei das Format des resultierenden HDTV-Bildes 1250/1:1/50 Hz ist.

9. Vorrichtung nach Anspruch 8, dadurch **gekennzeichnet,** daß die Wandlervorrichtung einen Speicher (37) mit der Größe eines halben HDTV-Vollbildes aufweist, in dem ein Unterabtastmuster gespeichert ist und aus dem das Feld zweimal in Folge in den räumlichen Interpolator (38) eingelesen wird, welcher die fehlenden Pixel interpoliert, wobei das Format des resultierenden HDTV-Bildes 1250/2:1/100 Hz ist.

10. Vorrichtung nach Anspruch 8 oder 9, dadurch **gekennzeichnet,** daß der Quincunx-Interpolator ein hybrides 7-Punkt-Medianfilter aufweist, welches in der Form eines linearen FIR-Filters strukturiert ist, und für das

$$Y_{FMH7} = MEDIAN [X_{(0,-1)}, X_{(-1,0)}, X_{(1,0)}, X_{(0,1)}, Y_{FIRI}, Y_{hor}, Y_{ver}]$$

gilt, wobei der erste Index von X die horizontale Position des Pixels und der zweite Index seine vertikale Position anzeigt, $Y_{FIRI}$ ein Wert ist, der von einem geeigneten linearen FIR-Filter interpoliert wird, bei dem die Gruppe der Eingangspunkte auch andere Punkte neben den unmittelbaren Nachbarpunkt umfassen kann, und

$$Y_{hor} = [X_{(-1,0)} + X_{(1,0)}]/2$$

$$Y_{ver} = [X_{(0,-1)} + X_{(0,1)}]/2.$$

**11.** Vorrichtung nach Anspruch 6, dadurch **gekennzeichnet,** daß die Speicher (2) drei HDTV-Teilbildspeicher aufweisen.

**Revendications**

**1.** Un procédé de traitement, dans un récepteur de télévision HD-MAC, d'un signal vidéo après débrassage, présentant la forme d'une séquence d'échantillons et obtenu du côté de l'émetteur par sous-échantillonnage d'une image originale, le procédé comprenant les étapes consistant :

- à diriger ledit signal vidéo après débrassage vers des mémoires (2) ;
- à lire les échantillons stockés dans les mémoires (2) et à les traiter de sorte que la structure de sous-échantillonnage originale soit générée ;
- à diriger les structures de sous-échantillonnage générées vers trois branches de traitement de signal (34, 35, 36) dont la première branche (34) réalise le traitement, dans une image complète, des échantillons des zones de l'image qui sont pour l'essentiel stationnaires et dont la deuxième branche (36) réalise le traitement, dans une trame de l'image, des échantillons des zones de l'image présentant des mouvements lents, et dont la troisième branche (35) réalise le traitement, dans une trame de l'image, des échantillons des zones de l'image présentant des mouvements rapides ;
- à relier au moyen d'un commutateur (C), sous la commande des informations de mouvement de l'image (DATV) présente dans le signal reçu, les structures d'échantillonnage générées dans les branches de traitement de signal (34, 35, 36) une à la fois vers des moyens de conversion susceptibles d'augmenter la fréquence de balayage originale,

  caractérisé par les étapes consistant :

- à traiter dans chaque branche de traitement de signal, les échantillons de sorte que le format de signal à la sortie de la branche soit de 1250/1:1/50 Hz/quinconce, c'est-à-dire 1250 lignes, fréquence de trame 50 Hz, balayage progressif, échantillons dans une structure en quinconce, la moitié des pixels de l'image TVHD étant absents :
- à interpoler les pixels manquants au niveau des moyens de conversion, en utilisant un seul et le même interpolateur (38) pour les structures d'échantillonnage obtenues à partir de chaque branche de traitement de signal (34, 35, 36), de sorte que le résultat soit une image TVHD orthogonale complète (1250/1:1/50 Hz ou 1250/2:1/100 Hz).

**2.** Procédé selon la revendication 1, caractérisé en ce que la structure de sous-échantillonnage dirigée vers la première branche (34) est dirigée telle quelle vers ledit commutateur sous la commande des informations de mouvement de l'image (C).

**3.** Procédé selon la revendication 1, caractérisé en ce que les pixels manquants sont interpolés, dans les moyens de conversion, en utilisant un interpolateur spatial en quinconce (38), de sorte que le format de l'image TVHD résultant soit 1250/1:1/50 Hz.

**4.** Procédé selon la revendication 2, caractérisé en ce que les structures d'échantillonnage provenant des différentes branches de traitement de signal (14, 35, 36) sont tout d'abord stockées dans une mémoire de moyens de conversion (37) d'une taille égale à la moitié d'une image complète TVHD, les trames de l'image étant lues deux fois en séquence dans cette mémoire, de sorte que la fréquence de balayage soit 100 Hz, et en ce que les pixels manquants sont interpolés au moyen dudit interpolateur spatial en quinconce (38), de sorte que le format de l'image TVHD résultante soit de 1250/2:1/100 Hz.

**5.** Procédé selon la revendication 1, caractérisé par l'utilisation, pour ledit interpolateur en quinconce (38), un filtre médian hybride à 7 points structuré sous la forme d'un filtre à réponse impulsionnelle finie (FIR) linéaire de formule :

$$Y_{FMH7} = MEDIAN\ [X_{(0,-1)},\ X_{(-1,0)},\ X_{(1,0)},\ Y_{FIRI},\ Y_{hor},\ Y_{ver}]$$

dans laquelle :

- le premier indice de X représente la position horizontale du pixel et le deuxième indice représente sa position verticale,

$Y_{FIRI}$ est une valeur, interpolée au moyen d'un filtre FIR linéaire adéquat, dans lequel le groupe de points d'entrée peut comprendre des points autres que les points immédiatement voisins,

$$Y_{hor} = [X_{(-1,0)} + X_{(1,0)}]/2,$$

$$Y_{ver} = [X_{(0,-1)} + X_{(0,1)}]/2.$$

**6.** Dispositif pour le traitement, dans un récepteur de télévision HD-MAC, d'un signal vidéo après débrassage présentant la forme d'une séquence d'échantillons et obtenu du côté de l'émetteur à partir d'une image originale par sous-échantillonnage, le dispositif comprenant :

- des mémoires (2) susceptibles de stocker un nombre souhaité d'échantillons reçus ;
- un circuit de restitution de structures de sous-échantillonnage (3), qui lit les échantillons stockés dans les mémoires (2) et qui, sous le contrôle des informations de mouvements de l'image (DATV) dans le signal reçu, restitue les structures de sous-échantillonnage originales ,
- trois branches parallèles de traitement de signal (34, 35, 36) reliées au circuit de restitution des structures de sous-échantillonnage (33), dont la première branche (34) réalise le traitement, dans une image complète, des échantillons des zones de l'image qui sont pour l'essentiel stationnaires, et dont la deuxième branche (36) réalise le traitement, dans une trame de l'image, des échantillons des zones de l'image présentant des mouvements lents, et dont la troisième branche (35) réalise le traitement, dans une trame de l'image, des échantillons des zones de l'image présentant des mouvements rapides, lesdites structures de sous-échantillonnage restituées étant dirigées vers les différentes branches de traitement de signal en fonction desdites informations de mouvement de l'image (DATV) ;
- des moyens de commutation (C) sous la commande desdites informations de mouvement de l'image (DATV) et qui relient les signaux générés dans lesdites branches de traitement de signal (34, 35, 36) un à la fois vers des moyens de conversion de fréquence de balayage (37, 38) susceptibles de convertir la fréquence de balayage originale de 50 Hz en une fréquence plus élevée,

caractérisé en ce que :

- chaque branche de traitement de signal comprend des moyens pour le traitement d'échantillons, de sorte que le format de signal à la sortie de chaque branche soit de 1250/1:1/50 Hz/quinconce, c'est-à-dire 1250 lignes, fréquence de trame 50 Hz, balayage progressif échantillons dans une structure en quinconce, la moitié des pixels de l'image TVHD étant absents ; et
- les moyens de conversion de la fréquence de balayage (37, 38) comprennent un interpolateur spatial en quinconce (38) réalisant l'interpolation des pixels manquants, de sorte que le résultat soit une image TVHD orthogonale complète (1250/1:1/50 Hz ou 1250/2:1/100 Hz).

**7.** Procédé selon la revendication 6, caractérisé en ce que la structure de sous-échantillonnage dirigée vers la première branche de traitement de signal (34) est dirigée telle quelle vers les dits moyens de commutation sous la commande des informations de mouvement de l'image (C).

**8.** Procédé selon la revendication 6, caractérisé en ce que les pixels manquants sont interpolés, dans les moyens de conversion de la fréquence de balayage (38) en utilisant un interpolateur spatial en quinconce (38), de sorte que le format de l'image TVHD résultant soit 1250/1:1/50 Hz.

**9.** Dispositif selon la revendication 8, caractérisé en ce que les moyens de conversion comprennent une mémoire (37) d'une taille égale à la moitié d'une image complète (TVHD), dans laquelle une structure de sous-échantillonnage provenant desdites branches de traitement de signal (34, 35, 36) est stockée, et à partir de laquelle la trame est lue deux fois en séquence vers l'interpolateur spatial (38), ce dernier réalisant l'interpolation des pixels manquants, de sorte que le format de l'image TVHD résultante soit de 1250/2:1/100 Hz.

**10.** Procédé selon la revendication 8 ou 9, caractérisé en ce que ledit interpolateur en quinconce est un filtre médian hybride à 7 points structuré sous la forme d'un filtre à réponse impulsionnelle finie (FIR) linéaire de formule :

$$Y_{FMH7} = MEDIAN [X_{(0,1)}, X_{(-1,0)}, X_{(1,0)}, Y_{FIRI}, Y_{hor}, Y_{ver}]$$

dans laquelle :

- le premier indice de X représente la position horizontale du pixel et le deuxième indice représente sa position verticale,

$Y_{FIRI}$ est une valeur, interpolée au moyen d'un filtre FIR linéaire adéquat, dans lequel le groupe de points d'entrée peut comprendre les points autres que les points immédiatement voisins,

$$Y_{hor} = [X_{(-1,0)} + X_{(1,0)}]/2,$$

$$Y_{ver} = [X_{(0,-1)} + X_{(0,1)}]/2.$$

11. Dispositif selon la revendication 6, caractérisé en ce que lesdites mémoires (2) sont trois mémoires de trame TVHD.

13.5 MHz

LINE
DESHUFFLER

13.5 MHz

3 TO 6
FIELD
DELAYS

13.5 MHz

SSPC

13.5 MHz

4

20 ms SPATIAL
INTERPOLATOR

54 MHz

5

80 ms SPATIAL
INTERPOLATOR

54 MHz

C

27 MHz

40 ms SPATIAL
& TEMPORAL
INTERPOLATOR

6

1

2

3

*Fig. 1*

50 Hz/2:1

C1

21

FIELD MEMORY

A

22

FIELD MEMORY

B

C2

100 Hz/2:1

23

VERTICAL FILTER

100 Hz/2:1

C3

*Fig. 2 A*

24

FIELD MEMORY

A/B

54 MHz

25

VERTICAL FILTER

A'/B'

C4

A/B

54 MHz

26

LINE BUFFER

108 MHz

*Fig. 2 B*

Fig. 3

1250/50/2:1 INTERFACE
LUMINANCE

| a1 | a2 | a3 | a4 | a5 |

| b1 | b2 | b3 | b4 | b5 |

| c1 | c2 | c3 | c4 | c5 |

| d1 | d2 | d3 | d4 | d5 |

| e1 | e2 | e3 | e4 | e5 |

| f1 | f2 | f3 | f4 | f5 |

ODD FIELDS                                     EVEN FIELDS

## Fig. 4A

1250/50/1:1 QUINCUNX INTERFACE
LUMINANCE

ODD FIELDS                                     EVEN FIELDS

## Fig. 4B

EP 0 536 721 B1

20 ms SAMPLING PATTERN

80 ms SAMPLING PATTERN

a1, a5, c3, e1 and e5 are original samples

a3, c1, c5 and e3 are interpolated by employing a quincunx filter

$b2 = (a1+c3)/2$
$b4 = (a5+c3)/2$
$d2 = (c3+e1)/2$
$d4 = (c3+e5)/2$

*Fig. 5*